# EUROPEAN PATENT APPLICATION

(11) **EP 4 471 092 A1**
(43) Date of publication of application: **04.12.2024**
(21) Application number: 23746688.3
(22) Date of filing: 12.01.2023
(51) Int. Cl.: C08L 83/04, B32B 27/00, C08K 3/36

(54) **THERMOSETTING RESIN COMPOSITION**

(30) Priority: 28.01.2022 JP 2022011889
(71) Applicant: NAGASE CHEMTEX CORPORATION, Osaka-shi, Osaka 550-8668 (JP)
(72) Inventor: KANAYA, Shingo, Tatsuno-shi, Hyogo 679-4124 (JP); ORIGUCHI, Kazuki, Tatsuno-shi, Hyogo 679-4124 (JP)
(74) Representative: Mewburn Ellis LLP
(86) International application number: PCT/JP2023/000651
(87) International publication number: WO 2023/145474

(57) **Abstract**

The present invention aims to provide a thermosetting resin composition that has a low refractive index after curing and can also form a thick film. The present invention relates to a thermosetting resin composition containing, based on the solid content thereof: (A) 1 to 35% by weight of a polysiloxane that is a hydrolysis condensation product of a methyltrialkoxysilane and tetraethoxysilane and has a weight average molecular weight of 10,000 to 100,000; and (B) 65 to 99% by weight of a moniliform silica.

## Description

### TECHNICAL FIELD

The present invention relates to a thermosetting resin composition, a cured film including a cured product of the composition, and a laminate including the cured film.

### BACKGROUND ART

Traditionally, in the fields of displays and optical components such as lenses, there has been a problem where visual effects are compromised due to surface reflections. In order to reduce the reflections, efforts have been made to laminate low-refractive-index films on the surfaces of displays or other devices. Fluorinated polymers or silica deposition materials are generally used as the materials of low-refractive-index films. However, fluorinated polymers have a refractive index of about 1.37 to 1.46 and therefore cannot sufficiently reduce the reflectance. Moreover, although silica deposition materials have a sufficiently low refractive index of 1.25 to 1.35, they have a film thickness on the order of several hundred nanometers and are therefore difficult to form into thick films.

Display applications with mini LEDs or micro LEDs in recent years require low-refractive-index materials which have a refractive index of 1.30 or less and can also be formed into a thick film of several microns in order to be applied to three-dimensional device structures.

Patent Literature 1 describes, as a material for forming a low-refractive-index film, a liquid composition for forming a low-refractive-index film which contains a polysiloxane including tetramethoxysilane or tetraethoxysilane and a moniliform colloidal silica. Patent Literature 2 also describes a composition for forming a low-refractive-index film which contains a polysiloxane including a silicon alkoxide and a fluoroalkyl group-containing silicon alkoxide and fumed silica particles. However, no thermosetting resin composition which has a low refractive index after curing and can also form a thick film has not been obtained.

### CITATION LIST

### - Patent Literature

Patent Literature 1: JP 2016-135838 A
Patent Literature 2: JP 2015-194740 A

### SUMMARY OF INVENTION

### - Technical Problem

The present invention aims to provide a thermosetting resin composition that has a low refractive index after curing and can also form a thick film.

### - Solution to Problem

The present inventors made various studies and found that a thermosetting resin composition has a low refractive index after curing and can also form a thick film when it contains a predetermined amount of a polysiloxane that is a hydrolysis condensation product of a methyltrialkoxysilane and tetraethoxysilane and has a predetermined weight average molecular weight, and a predetermined amount of a moniliform silica. Thus, the present inventors completed the present invention.

Specifically, the present invention relates to a thermosetting resin composition, containing, based on a solid content thereof: (A) 1 to 35% by weight of a polysiloxane that is a hydrolysis condensation product of a methyltrialkoxysilane and tetraethoxysilane and has a weight average molecular weight of 10,000 to 100,000 and (B) 65 to 99% by weight of a moniliform silica.

Preferably, a molar ratio of the methyltrialkoxysilane to the tetraethoxysilane is 0.7 to 3.

Preferably, the (A) polysiloxane is a hydrolysis condensation product of a methyltrialkoxysilane and tetraethoxysilane obtained in the presence of a basic catalyst.

The present invention also relates to a cured film, including a cured product of the above thermosetting resin composition and having a refractive index at a wavelength of 589 nm of 1.4 or less immediately after film formation.

The present invention also relates to a cured film, including a cured product of the above thermosetting resin composition and having a film thickness of 1 um or more.

Preferably, a rate of change of a refractive index of the cured film after exposure to a temperature of 85°C and a relative humidity of 85% for 500 hours, compared to a refractive index immediately after film formation, is 100 or less.

The present invention also relates to a laminate, including a substrate and the above cured film.

The present invention also relates to a laminate, including a substrate and a cured film having a film thickness of 1 um or more, the cured film including 65 to 99% by weight of a moniliform silica, having a porosity of 40% or more, and having a refractive index at a wavelength of 589 nm of 1.4 or less.

### - Advantageous Effects of Invention

The thermosetting resin composition of the present invention contains a polysiloxane which is a hydrolysis condensation product of a methyltrialkoxysilane and tetraethoxysilane and has a predetermined weight average molecular weight, and a moniliform silica, and therefore has a low refractive index after curing and can also form a thick film.

### BRIEF DESCRIPTION OF DRAWINGS

FIG. 1 shows a cross-sectional view (x100,000) of a cured film of Example 2 observed with a scanning electron microscope.
FIG. 2 shows a cross-sectional view (x200,000) of the cured film of Example 2 observed with the scanning electron microscope.

### DESCRIPTION OF EMBODIMENTS

### <<Thermosetting resin composition>>

The thermosetting resin composition of the present invention contains, based on the solid content thereof: (A) 1 to 35% by weight of a polysiloxane that is a hydrolysis condensation product of a methyltrialkoxysilane and tetraethoxysilane and has a weight average molecular weight of 10,000 to 100,000 and (B) 65 to 99% by weight of a moniliform silica.

### <(A) polysiloxane>

The polysiloxane used as the component (A) (hereinafter, also referred to simply as (A) polysiloxane) is a hydrolysis condensation product of a methyltrialkoxysilane and tetraethoxysilane, which is an alkoxysilane with an increased molecular weight. Examples of the (A) polysiloxane include polysiloxanes containing one or more siloxane bonds (Si-O-Si) per molecule. Preferably, the (A) polysiloxane contains a siloxane bond (Si-O-Si) as a main chain. The structure of the (A) polysiloxane is not limited and may be linear or branched.

The present invention uses, among trialkoxysilanes, a methyltrialkoxysilane in which a methyl group is directly bound to a silicon atom to reduce the refractive index of the (A) polysiloxane, thereby improving the affinity between the (A) polysiloxane and the (B) moniliform silica. The alkoxy group in the methyltrialkoxysilane may be any alkoxy group that can be hydrolyzed by a hydrolysis condensation reaction between the methyltrialkoxysilane and tetraethoxysilane to generate a hydroxy group (silanol group). The number of carbon atoms of the alkoxy group is preferably 1 to 5, more preferably 1 to 3. Specific examples of the methyltrialkoxysilane include methyltriethoxysilane and methyltrimethoxysilane. These may be used alone or in combinations of two or more.

The blending ratio of the methyltrialkoxysilane and tetraethoxysilane in the hydrolysis condensation reaction is not limited. Preferably, the molar ratio of the methyltrialkoxysilane to tetraethoxysilane is 0.7 to 3. When the molar ratio is less than 0.7, the polysiloxane tends to have a lower molecular weight, resulting in a whitened film. When the molar ratio is more than 3, the polysiloxane tends to have a higher molecular weight, causing gelation.

The (A) polysiloxane may be a hydrolysis condensation product of a methyltrialkoxysilane and tetraethoxysilane as well as an alkoxysilane represented by the following formula (I) as long as it has a weight average molecular weight of 10,000 to 100,000:

SiR₄ (I)

wherein R represents a hydrogen atom, a hydroxy group, a C1-C5 alkoxy group, an optionally substituted alkyl group, an optionally substituted alkenyl group, or an optionally substituted phenyl group, provided that at least one of the four Rs is a C1-C5 alkoxy group or a hydroxy group.

Non-limiting examples of substituents that may be used in the formula (I) include a (meth)acryloxy group, a vinyl group, an epoxy group, a glycidoxy group, an amino group, a mercapto group, a ureide group, and an isocyanate group.

Examples of the alkoxysilane represented by formula (I) include 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-mercaptopropylmethyldimethoxysilane, 3-mercaptopropyltrimethoxysilane, vinyltrimethoxysilane, vinyltriethoxysilane, 3-acryloxypropyltrimethoxysilane, N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, 3-triethoxysilyl-N-(1,3-dimethyl-butylidene)propylamine, N-phenyl-3-aminopropyltrimethoxysilane, 3-isocyanatopropyltriethoxysilane, phenyltrimethoxysilane, dimethyldimethoxysilane, trimethylmethoxysilane, methylphenoxysilane, n-propyltrimethoxysilane, diisopropyldimethoxysilane, isobutyltrimethoxysilane, diisobutyldimethoxysilane, isobutyltriethoxysilane, n-hexyltrimethoxysilane, n-hexyltriethoxysilane, cyclohexylmethyldimethoxysilane, n-octyltriethoxysilane, n-decyltrimethoxysilane, tetramethoxysilane, tetrapropoxysilane, tetrabutoxysilane, trimethylethoxysilane, methoxydimethyl(phenyl)silane, triphenylmethoxysilane, methoxy(dimethyl)octadecylsilane, methoxy(dimethyl)-n-octylsilane, diphenyldimethoxysilane, diphenyldiethoxysilane, phenylmethyldimethoxysilane, and phenylmethyldiethoxysilane.

When the (A) polysiloxane contains, as a structural unit, an alkoxysilane other than methyltrialkoxysilanes and tetraethoxysilane, the amount of alkoxysilanes other than methyltrialkoxysilanes and tetraethoxysilane blended in the hydrolysis condensation reaction is preferably 0.01 to 5 mol%, more preferably 0.05 to 1 mol%, based on the total number of moles of alkoxysilanes.

For example, the hydrolysis condensation reaction between the methyltrialkoxysilane and tetraethoxysilane may include the formation of hydroxy groups by hydrolysis of the alkoxy groups of the methyltrialkoxysilane and tetraethoxysilane, and a condensation reaction of the formed hydroxy groups. These reactions may be performed in one step. When an alkoxysilane other than methyltrialkoxysilanes and tetraethoxysilane is used and the alkoxysilane contains a hydroxy group, the hydroxy group may be directly used in the condensation reaction. The temperature in the reaction is not limited but is preferably 20°C to 100°C, more preferably 30°C to 50°C. The duration is not limited but is preferably 0.5 to 24 hours, more preferably 1 to 5 hours.

Preferably, water is added in the hydrolysis condensation reaction of the alkoxysilanes. The amount of water added is preferably 0.5 to 5 mol, more preferably 1 to 3 mol per mol of the total alkoxysilanes.

The (A) polysiloxane can be obtained by the hydrolysis condensation reaction between the methyltrialkoxysilane and tetraethoxysilane. The (A) polysiloxane may contain some remaining unreacted alkoxy groups or hydroxy groups obtained by hydrolysis of alkoxy groups.

The hydrolysis condensation reaction of the alkoxysilane represented by formula (I) may be performed in the presence of any component, such as a catalyst and a solvent.

Non-limiting examples of catalysts include basic catalysts and acidic catalysts. Non-limiting examples of the basic catalysts include tetramethylammonium hydroxide, ammonia water, sodium hydroxide, and potassium hydroxide. Examples of the acidic catalysts include organic acids such as formic acid, acetic acid, glacial acetic acid, p-toluenesulfonic acid, methanesulfonic acid, ethanesulfonic acid, trifluoroacetic acid, trifluoromethanesulfonic acid, and polystyrenesulfonic acid; inorganic acids such as hydrochloric acid, sulfuric acid, nitric acid, phosphoric acid, boric acid, halogenated aluminums including aluminum chloride and aluminum bromide, and aluminum nitrate; acidic silica gel, and acidic silica sol. These may be used alone or in combinations of two or more. To improve the weight average molecular weight of the (A) polysiloxane, basic catalysts are preferred among these, with tetramethylammonium hydroxide being more preferred. The pH in the hydrolysis condensation reaction is preferably 9 to 14, more preferably 11 to 13. The amount of catalysts is not limited but is preferably 0.001 to 0.1 mol per mol of the total alkoxysilanes represented by formula (I).

Examples of solvents include alcohols such as methanol, ethanol, propanol, and butanol; ethers such as tetrahydrofuran; glycol ethers such as ethylene glycol monomethyl ether, propylene glycol monomethyl ether, ethylene glycol monoethyl ether, ethylene glycol monobutyl ether, ethylene glycol dimethyl ether, diethylene glycol monomethyl ether, diethylene glycol monoethyl ether, diethylene glycol dimethyl ether, diethylene glycol diethyl ether, and diethylene glycol monobutyl ether; alkylene glycol monoalkyl ether acetates such as methyl cellosolve acetate, ethyl cellosolve acetate, butyl cellosolve acetate, propylene glycol methyl ether acetate, and 3-methoxybutyl-1-acetate; aromatic hydrocarbons such as toluene and xylene; and ketones such as methyl ethyl ketone, methyl isobutyl ketone, methyl amyl ketone, and cyclohexanone. These solvents may be used alone or in combinations of two or more. The amount of solvents is not limited but is preferably 10 to 50 mol, more preferably 20 to 40 mol per mol of the total of methyltrialkoxysilanes and tetraethoxysilane.

After completion of the hydrolysis condensation reaction between the methyltrialkoxysilane and tetraethoxysilane, the adjustment of the pH of the reaction solution and/or the evaporation of the solvent may be performed as needed.

The weight average molecular weight (Mw) of the (A) polysiloxane is not limited as long as it is 10,000 to 100,000. It is preferably 14,000 to 70,000, more preferably 16,000 to 50,000. When the weight average molecular weight is less than 10,000, the resulting cured film may whiten and have a poor surface appearance. When the weight average molecular weight is more than 100,000, the liquid stability (pot life) may decrease. Here, the weight average molecular weight is determined by gel permeation chromatography (GPC).

The amount of the (A) polysiloxane in the thermosetting resin composition of the present invention is 1 to 35% by weight, preferably 5 to 30% by weight, more preferably 5 to 20% by weight based on the solid content. When the amount is less than 1% by weight based on the solid content, the uniformity of the resulting cured film may deteriorate, while when the amount is more than 35% by weight, the cured film tends to have lower durability against moisture and heat and have a higher refractive index.

### <(B) Silica>

The (B) moniliform silica (hereinafter, also referred to simply as (B) silica) contributes to reducing the refractive index of the cured product of the thermosetting resin composition. The inclusion of the moniliform silica can provide voids in the thermosetting resin composition and is thus considered to reduce the refractive index of the cured film.

The moniliform silica refers to a few to several tens of silica single particles connected like a rosary or string of beads. The number of silica single particles constituting the moniliform silica is preferably 3 or more, more preferably 5 or more. The silica single particles in the moniliform silica may be present in the form of a straight chain or a branched chain.

The average particle size of the (B) silica is not limited but is preferably 60 nm or less, more preferably 20 nm or less. When the average particle size is more than 60 nm, the transparency of the resulting coating film may deteriorate. Here, the average particle size refers to the particle size of the silica single particles.

The amount of the (B) silica in the thermosetting resin composition is not limited as long as it is 65 to 99% by weight based on the solid content. It is preferably 70 to 95% by weight, more preferably 80 to 95% by weight. When the amount is less than 70% by weight, the durability may significantly decrease. When the amount is more than 95% by weight, a rough cured film may be obtained.

### <Production of thermosetting resin composition>

The thermosetting resin composition can be obtained by mixing the (A) polysiloxane and the (B) silica as well as optional components, which are described below, as needed. The mixing can be performed by stirring with a stirrer or kneading with a roll mill, for example. The mixing order of each component is not limited. The temperature during the mixing is desirably 1°C to 60°C.

### <Optional component>

The thermosetting resin composition of the present invention may optionally contain other components in addition to the (A) polysiloxane and the (B) silica. Examples of such other components include solvents, thermosetting resins, thermoplastic resins, inorganic fine particles, conductive polymers, carbon materials, polymerization initiators, and leveling agents.

Examples of the solvents include water; alcohols such as methanol, ethanol, 2-propanol, butanol, and 3-methoxy-3-methyl-1-butanol; ethers such as tetrahydrofuran; glycol ethers such as ethylene glycol monomethyl ether, propylene glycol monomethyl ether, ethylene glycol monoethyl ether, ethylene glycol monobutyl ether, ethylene glycol dimethyl ether, diethylene glycol monomethyl ether, diethylene glycol monoethyl ether, diethylene glycol dimethyl ether, diethylene glycol diethyl ether, and diethylene glycol monobutyl ether; alkylene glycol monoalkyl ether acetates such as methyl cellosolve acetate, ethyl cellosolve acetate, butyl cellosolve acetate, propylene glycol methyl ether acetate, and 3-methoxybutyl-1-acetat; aromatic hydrocarbons such as toluene and xylene; ketones such as methyl ethyl ketone, methyl isobutyl ketone, diethyl ketone, methyl amyl ketone, and cyclohexanone; N-methyl-1-methylpyrrolidone, 2-pyrrolidone, and γ-butyrolactone. These solvents may be used alone or in combinations of two or more.

When the thermosetting resin composition of the present invention contains a solvent, the amount of the solvent is not limited and may be appropriately adjusted to give a desired percentage of solids. The percentage of solids of the thermosetting resin composition of the present invention is not limited but is preferably 1 to 25% by weight, more preferably 5 to 20% by weight. When the percentage of solids is less than 1% by weight, the film-forming properties may deteriorate. When the percentage of solids is more than 25% by weight, film formation may be difficult due to the too high viscosity.

Examples of the thermosetting resins include epoxy resins, acrylic resins, and melamines. Examples of the thermoplastic resins include polyester resins, urethane resins, and polyolefin resins. The amount of the thermosetting resins or thermoplastic resins, if used, is preferably 1 to 500 parts by weight, more preferably 5 to 200 parts by weight per 100 parts by weight of the polysiloxane (A).

Examples of the inorganic fine particles include silica, metal oxide fine particles, nitrides, composite oxides formed of two or more metal elements, and compounds in which a metal oxide is doped with a heteroelement. Specific examples of the metal oxide fine particles include spherical silica, hollow silica, zirconium oxide (ZrO₂), titanium oxide (TiO₂), silicon oxide (SiO₂), aluminum oxide (Al₂O₃), iron oxide (Fe₂O₃, FeO, Fe₃O₄), copper oxide (CuO, Cu₂O), zinc oxide (ZnO), yttrium oxide (Y₂O₃), niobium oxide (Nb₂O₅), molybdenum oxide (MoO₃), indium oxide (In₂O₃, In₂O), tin oxide (SnO₂), tantalum oxide (Ta₂O₅), tungsten oxide (WO₃, W₂O₅), lead oxide (PbO, PbO₂), bismuth oxide (Bi₂O₃), cerium oxide (CeO₂, Ce₂O₃), antimony oxide (Sb₂O₅, Sb₂O₅), and germanium oxide (GeO₂, GeO). The amount of these inorganic fine particles is preferably 1 to 1000 parts by weight, more preferably 5 to 100 parts by weight per 100 parts by weight of the polysiloxane (A).

Examples of the conductive polymers include polythiophene, polypyrrole, polyaniline, polyacetylene, polyphenylene vinylene, and polynaphthalene, as well as derivatives thereof and composites thereof with dopants. Poly(3,4-disubstituted thiophenes) or composites of poly(3,4-disubstituted thiophenes) with polyanions are preferred. The amount of the conductive polymers is preferably 0.5 to 100 parts by weight, more preferably 1 to 10 parts by weight per 100 parts by weight of the polysiloxane (A).

Non-limiting examples of the carbon materials include carbon nanomaterials, graphene, and fullerene. The amount of the carbon materials is preferably 0.5 to 100 parts by weight, more preferably 1 to 10 parts by weight per 100 parts by weight of the polysiloxane (A).

Examples of usable polymerization initiators include photoradical polymerization initiators, thermal radical polymerization initiators, and photocationic polymerization initiators. These polymerization initiators may be used alone or in combination.

Non-limiting examples of the leveling agents include siloxane-based compounds such as polyether-modified polydimethylsiloxanes, polyether-modified siloxanes, polyether ester-modified hydroxy group-containing polydimethylsiloxanes, polyether-modified acrylic group-containing polydimethylsiloxanes, polyester-modified acrylic group-containing polydimethylsiloxanes, perfluoropolydimethylsiloxanes, perfluoropolyether-modified polydimethylsiloxanes, and perfluoropolyester-modified polydimethylsiloxanes; fluorinated compounds such as perfluoroalkyl carboxylic acids and perfluoroalkyl polyoxyethylene ethanols; polyether-based compounds such as polyoxyethylene alkyl phenyl ethers, propylene oxide polymers, and ethylene oxide polymers; carboxylates such as coconut oil fatty acid amine salts and gum rosins; ester-based compounds such as castor oil sulfuric acid esters, phosphoric acid esters, alkyl ether sulfates, sorbitan fatty acid esters, sulfonic acid esters, and succinic acid esters; sulfonate compounds such as alkyl aryl sulfonic acid amine salts and sodium dioctyl sulfosuccinate; phosphate compounds such as sodium lauryl phosphate; amide compounds such as coconut oil fatty acid ethanol amides; and acrylic compounds. The amount of the leveling agents is preferably 0.001 to 5% by weight, more preferably 0.01 to 1% by weight based on the solid content of the thermosetting resin composition.

### <<Cured film>>

A cured film can be obtained by applying the thermosetting resin composition of the present invention to a substrate, followed by heating. The application to a substrate may be performed by a usual method such as bar coating, dip coating, spin coating, slit coating, or inkjet coating. The heating temperature for curing is not limited but is preferably 60°C to 180°C, more preferably 80°C to 150°. The duration of heating for curing is not limited but is preferably 2 to 60 minutes, more preferably 5 to 30 minutes.

The cured film of the present invention includes the cured product of the thermosetting resin composition of the present invention and is thus characterized by having a low refractive index. The refractive index (nD) at a wavelength of 589 nm of the cured film is not limited but is preferably 1.4 or less, more preferably 1.35 or less, still more preferably 1.3 or less. When the refractive index at a wavelength of 589 nm is more than 1.4, the effect of reducing reflection on the surface of the cured product may be insufficient.

The porosity of the cured film of the present invention is not limited but is preferably 40% or more, more preferably 45% or more. The upper limit of the porosity is not limited but is generally 70% or less. When the porosity is less than 40%, the refractive index tends to increase. When the porosity is more than 70%, the cured film tends to be fragile. The porosity of the cured film can be calculated by the evaluation method described in

### EXAMPLES.

The film thickness of the cured film of the present invention is preferably 1 um or more, more preferably 2 um or more. The upper limit of the film thickness is not limited but is generally 10 um or less.

The cured film of the present invention includes the cured product of the thermosetting resin composition of the present invention and is thus characterized by having excellent durability against humidity and heat. The rate of change of the refractive index of the cured film after exposure to a temperature of 85°C and a relative humidity of 85% for 500 hours, compared to the refractive index immediately after the film formation, is preferably 10% or less, more preferably 5% or less.

### <<Laminate 1>>

The present invention also relates to a laminate including a substrate and the cured film of the present invention.

### <Substrate>

Examples of the material of the substrate include glass, polyethylene terephthalate (PET), polyethylene naphthalate, modified polyesters and other polyester-based resins, polyethylene (PE) resins, polypropylene (PP) resins, polystyrene resins, cyclic olefin-based resins and other polyolefin-based resins, poly(vinyl chloride), poly(vinylidene chloride), and other vinyl-based resins, polyether ether ketone (PEEK) resins, polysulfone (PSF) resins, polyether sulfone (PES) resins, polycarbonate (PC) resins, polyamide resins, polyimide resins, acrylic resins, and triacetylcellulose (TAC) resins. The thickness of the substrate is not limited but is preferably 50 to 200 um. The laminate of the present invention may include an adhesion layer, a conductive layer, an antireflection layer, or any other layer in addition to the substrate and the cured film of the present invention.

### <<Laminate 2»

The present invention also relates to a laminate including a substrate and a cured film having a film thickness of 1 um or more, the cured film containing 65 to 99% by weight of a moniliform silica, having a porosity of 40% or more, and having a refractive index at a wavelength of 589 nm of 1.4 or less.

The substrate may be as described for the laminate 1. Like the laminate 1, the laminate 2 may include an adhesion layer, a conductive layer, an antireflection layer, or any other layer in addition to the substrate and the cured film.

The cured film can be obtained by curing a resin composition. The resin composition used to produce the cured film is not limited, and the thermosetting resin composition described above may be used. The conditions for curing the thermosetting resin composition are as described above.

Although the film thickness of the cured film is 1 um or more, it is preferably 2 um or more. The upper limit of the film thickness is not limited but is generally 10 um or less.

Although the amount of the moniliform silica in the cured film is 65 to 99% by weight, it is preferably 70 to 95% by weight, more preferably 80 to 95% by weight. The amount of the moniliform silica in the cured film can be determined based on the solid content of the thermosetting resin composition constituting the cured film.

The cured film has a porosity of 40% or more, preferably 45% or more. The upper limit of the porosity is not limited but is generally 70% or less. The cured film has a refractive index at a wavelength of 589 nm of 1.4 or less, preferably 1.35 or less, more preferably 1.3 or less.

The laminate of the present invention includes the cured film having a low refractive index and a large film thickness and is therefore suitable for adhesive, protective, or antistatic layers for optical applications. Specifically, it is suitable for display members such as liquid crystals, organic ELs, and micro-LEDs, and lens materials.

### EXAMPLES

Hereinafter, the present invention will be described using examples below, but the present invention is not limited to the examples. Hereinafter, "parts" and "%" mean "parts by weight" and "% by weight", respectively, unless otherwise stated.

(1) The chemicals used in the synthesis examples of (A) polysiloxanes are listed below.
   (1-1) Alkoxysilane
      Tetraethoxysilane (TEOS) available from Tokyo Chemical Industry Co., Ltd.
      Methyltriethoxysilane (XIAMETER OFS-6383) available from Dow Chemical
      Ethyltriethoxysilane available from Tokyo Chemical Industry Co., Ltd.
   (1-2) Catalyst
      Tetramethylammonium hydroxide (TMAH) available from Tokyo Chemical Industry Co., Ltd.
   (1-3) Solvent
      Propylene glycol monomethyl ether (PGME) available from Daicel Corporation
(2) The chemicals used in the examples and comparative examples are listed below.
   (2-1) (A) Polysiloxane
      Those produced in Synthesis Examples 1 and 2 and Comparative Synthesis Examples 1 to 3 were used.
   (2-2) (B) Silica
      Moniliform silica fine particle dispersion (product number: PGM-ST-UP, average particle size: 12 nm, dispersing medium: propylene glycol monomethyl ether, solid content: 15.5% by weight) available from Nissan Chemical Corporation
   (2-3) Solvent
      Propylene glycol monomethyl ether (PGME) available from Daicel Corporation

### (3) Evaluation method

### (3-1) Refractive index

The refractive index at a wavelength of 589 nm of the cured film was measured using an ellipsometer (M-2000U, J. A. Woollam). The refractive index of the cured film after exposure to a temperature of 85°C and a relative humidity of 85% for 500 hours was also measured. Then, the rate of change of the measured refractive index, compared to the refractive index immediately after the film formation, was calculated by the following equation: Rate of change (%) = ((Refractive index after moist heat test) - (Refractive index immediately after film formation))/(Refractive index immediately after film formation) × 100.

### (3-2) Porosity

The porosity was calculated using the following equation described in a prior art document (Applied Optics, 1980, 19, 1425):
n_{ρ}² = (n²_{b} - 1) (1 - ρ) + 1 (where ρ represents the porosity, n_{b} represents the refractive index of silica, and n_{ρ} represents the actually measured refractive index), with the refractive index of the silica set as 1.45.

### (3-3) Surface appearance

The surface of the cured film was visually observed to classify the cured film into transparent one, whitened one, and cracked one for evaluation.

### (Synthesis Examples 1 and 2, Comparative Synthesis Examples 1 to 3) Production of (A) polysiloxane

Predetermined amounts of methanol, the trialkoxysilane, tetraethoxysilane, and water were charged into a 300-mL separable flask at room temperature so that the amounts of the components satisfied the molar ratio shown in Table 1 below, and they were stirred for 30 minutes at room temperature. Next, a 20% by weight aqueous solution of tetramethylammonium hydroxide (TMAH) as a catalyst was dropwise added to the mixture and then aged at 40°C for the duration shown in Table 1 below to obtain (A) a polysiloxane. The weight average molecular weight of the (A) polysiloxane was measured by gel permeation chromatography (GPC). Table 1 shows the results. It should be noted that the amount of added water shown in Table 1 is the total amount of the charged water and the water contained in the TMAH aqueous solution.

**[Table 1]**

| | | Synthesis Example 1 | Synthesis Example 2 | Comparative Synthesis Example 1 | Comparative Synthesis Example 2 | Comparative Synthesis Example 3 |
|---|---|---|---|---|---|---|
| Alkoxysilane (mol%) | Methyltriethoxysilane (OFS-6383) | 45 | 60 | 30 | - | - |
| | Ethyltriethoxysilane | - | - | - | - | 50 |
| | Tetraethoxysilane | 55 | 40 | 70 | 100 | 50 |
| Molar ratio of monomers (Methyltrialkoxysilane/Tetraethoxysilane) | | 0.82 | 1.50 | 0.43 | - | - |
| Water/Monomer molar ratio | | 3 | 3 | 3 | 3 | 3 |
| TMAH | TMAH/Monomer molar ratio | 0.03 | 0.03 | 0.03 | 0.03 | 0.03 |
| Methanol | Methanol/Monomer molar ratio | 38 | 38 | 38 | 38 | 38 |
| Reaction duration (hr) | | 2 | 2 | 2 | 2 | 2 |
| Weight average molecular weight (Mw) | | 18,000 | 23,000 | 6,700 | 2,300 | 13,000 |

### (Examples 1 to 3, Comparative Examples 1 to 4)

The (A) polysiloxane and the (B) silica were mixed at the weight ratio shown in Table 2 below using propylene glycol monomethyl ether as a solvent while adjusting the solid content to be 15%, whereby a thermosetting resin composition was obtained. The thermosetting resin composition was applied to a glass substrate with a bar coater and then cured at 150°C for 30 minutes to form a cured film having a film thickness of 2 um. The refractive index and porosity of the coating film and the appearance of the cured film were evaluated, and Table 2 shows the results.

**[Table 2]**

| | | Example 1 | Example 2 | Example 3 | Comparative Example 1 | Comparative Example 2 | Comparative Example 3 | Comparative Example 4 |
|---|---|---|---|---|---|---|---|---|
| (A) Polysiloxane | Synthesis Example 1 | 5 | - | 30 | - | - | - | 40 |
| | Synthesis Example 2 | - | 10 | - | - | - | - | - |
| | Comparative Synthesis Example 1 | - | - | - | 5 | - | - | - |
| | Comparative Synthesis Example 2 | - | - | - | - | 10 | - | - |
| | Comparative Synthesis Example 3 | - | - | - | - | - | 10 | - |
| (B) Moniliform silica | | 95 | 90 | 70 | 95 | 90 | 90 | 60 |
| Refractive index (nD) | Immediately after film formation | 1.243 | 1.244 | 1.263 | - | - | - | 1.31 |
| | After moist heat test | 1.243 | 1.246 | 1.271 | - | - | - | 1.47 |
| | Amount of change | 0 | 0.002 | 0.008 | - | - | - | 0.16 |
| | Rate of change (%) | 0.00 | 0.16 | 0.63 | - | - | - | 12.21 |
| Porosity (%) | | 50 | 50 | 46 | - | - | - | 35 |
| Appearance of cured film | | Transparent | Transparent | Transparent | Whitened | Cracked | Whitened | Transparent |

In Comparative Examples 1 and 2, the (A) polysiloxanes used each had a weight average molecular weight of less than 10,000, and the resulting cured films became whitened or cracked. The cured film in Comparative Example 3 became whitened. This is probably because the (A) polysiloxane used, which contains ethyltriethoxysilane in an amount of 50 mol% based on the total number of moles of alkoxysilanes, had a reduced compatibility with the (B) moniliform silica. In Comparative Example 4, the amount of the (A) polysiloxane exceeded 35% by weight based on the solid content, and the resulting cured film exhibited a high rate of change in refractive index after the moist heat test. The cured films in Example 1 to 3 kept the transparency, had a high porosity, and exhibited a suppressed rate of change in refractive index after the moist heat test.

### (Observation of cross-section of cured film)

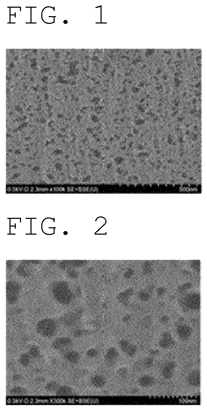

A cross-section of the cured film in Example 2 was observed with a scanning electron microscope (Regulus 8220, Hitachi High-Technologies Corporation). As shown in FIG. 1 (x100,000) and FIG. 2 (x200,000), a large number of void structures were confirmed. Moreover, the cured film had a porosity of 50%. Since the silica as a main component usually has a refractive index of about 1.45 to 1.46 (at a wavelength of 589 nm), the large number of voids formed in the cured film are considered to contribute to reducing the refractive index.

## Claims

1. A thermosetting resin composition, comprising, based on a solid content thereof:
(A) 1 to 35% by weight of a polysiloxane that is a hydrolysis condensation product of a methyltrialkoxysilane and tetraethoxysilane and has a weight average molecular weight of 10,000 to 100,000; and
(B) 65 to 99% by weight of a moniliform silica.

2. The thermosetting resin composition according to claim 1,
wherein a molar ratio of the methyltrialkoxysilane to the tetraethoxysilane is 0.7 to 3.

3. The thermosetting resin composition according to claim 1 or 2,
wherein the (A) polysiloxane is a hydrolysis condensation product of a methyltrialkoxysilane and tetraethoxysilane obtained in the presence of a basic catalyst.

4. A cured film, comprising a cured product of the thermosetting resin composition according to any one of claims 1 to 3 and having a refractive index at a wavelength of 589 nm of 1.4 or less immediately after film formation.

5. A cured film, comprising a cured product of the thermosetting resin composition according to any one of claims 1 to 3 and having a film thickness of 1 um or more.

6. The cured film according to claim 4 or 5,
wherein a rate of change of a refractive index of the cured film after exposure to a temperature of 85°C and a relative humidity of 85% for 500 hours, compared to a refractive index immediately after film formation, is 10% or less.

7. A laminate, comprising:
a substrate; and
the cured film according to any one of claims 4 to 6.

8. A laminate, comprising:
a substrate; and
a cured film having a film thickness of 1 um or more, the cured film comprising 65 to 99% by weight of a moniliform silica, having a porosity of 40% or more, and having a refractive index at a wavelength of 589 nm of 1.4 or less.
